# EUROPÄISCHE PATENTSCHRIFT

(11) **EP 3 532 831 B1**
(45) Veröffentlichungstag und Bekanntmachung des Hinweises auf die Patenterteilung: **22.06.2022**
(21) Anmeldenummer: 17792000.6
(22) Anmeldetag: 16.10.2017
(51) Int. Cl.: G01N 27/02, G01N 15/06

(54) **SENSORELEMENT ZUR BESTIMMUNG VON PARTIKELN IN EINEM FLUIDEN MEDIUM**
SENSOR ELEMENT FOR DETERMINING PARTICLES IN A FLUID MEDIUM
ÉLÉMENT CAPTEUR POUR DÉTECTER DES PARTICULES DANS UN MILIEU FLUIDE

(30) Priorität: 28.10.2016 DE 102016221372
(43) Veröffentlichungstag der Anmeldung: 04.09.2019
(73) Patentinhaber: Robert Bosch GmbH, 70442 Stuttgart (DE)
(72) Erfinder: BAARS, Enno, 71229 Leonberg (DE); TIEFENBACH, Andy, 71665 Vaihingen-Horrheim (DE); HERWEG, Karola, 70469 Stuttgart (DE)
(86) Internationale Anmeldenummer: PCT/EP2017/076313
(87) Internationale Veröffentlichungsnummer: WO 2018/077646

(56) Entgegenhaltungen:
- DE-A1-102006 042 361
- AHMED FARAG I S ET AL: "Study of dielectric properties of alpha-alumina doped with MnO, CdO and MoO", INDIAN JOURNAL OF PURE AND APPLIED PHYSICS, NEW DEHLI, IN , vol. 43, no. 6 30 June 2005 (2005-06-30), pages 446-458, XP009533955, ISSN: 0019-5596 Retrieved from the Internet: URL:http://hdl.handle.net/123456789/8825

## Beschreibung

### Stand der Technik

Aus dem Stand der Technik ist eine Vielzahl an Partikelsensoren zur Bestimmung von Partikeln in fluiden Medien bekannt. Derartige Partikelsensoren können beispielsweise zur Rußmassenbestimmung im Abgastrakt zur Überwachung von Diesel-Partikelfiltern eingesetzt werden. Auch andere Einsatzgebiete sind jedoch grundsätzlich möglich, wie beispielsweise Einsatzgebiete im Bereich der industriellen Abgasreinigung.

Sensorelemente, beispielsweise keramische Sensorelemente, können insbesondere in einem Schutzrohr eingesetzt werden und mittels dieses Schutzrohrs in den Abgastrakt eingebracht werden. Das keramische Sensorelement weist in vielen Fällen ein Elektrodensystem auf, das zur Messung des Rußes auf Basis von dessen elektrischer Leitfähigkeit dient. Nach dem Stand der Technik kommen bei diesen Partikelsensoren beispielsweise resistive Messverfahren wie in DE 10 2005 053 120 A1 beschrieben zum Einsatz. Dabei können beispielsweise kammförmige Elektroden eingesetzt werden. Eine wichtige gesetzliche Voraussetzung für den Einsatz in der Automobiltechnik, insbesondere für die Überwachung von Diesel-Partikelfiltern, ist dabei die so genannte Eigendiagnose, d.h. die Einrichtung des Sensors, sich selbst zu überwachen. Eine Anforderung hierbei ist in der Regel eine kontinuierliche elektrische Eigendiagnose der Elektrodenstruktur, beispielsweise mindestens zweifach pro Sekunde. Eine technische Herausforderung der bekannten Vorrichtungen besteht dabei in vielen Fällen darin, dass eine derartige Diagnose nur in bestimmten Betriebsphasen möglich ist, jedoch nicht kontinuierlich. Aus dem Stand der Technik sind hierzu weitere Ansätze bekannt. In DE 10 2007 046 096 A1 ist beispielsweise ein Verfahren zur Eigendiagnose eines Partikelsensors bekannt, umfassend ein auf der Oberfläche des Sensors angeordnetes Messelektrodensystem mit ineinander eingreifenden interdigitalen Messelektroden sowie eine tieferliegend angeordnete Prüfelektrode. Mittels einer Kapazitätsmessung, beispielsweise durch Anlegen einer Wechselspannung oder einer Gleichspannung, kann daraus ein Maß für die Funktionsfähigkeit des Sensors ausgegeben werden. Eine technische Herausforderung hierbei besteht allerdings darin, dass mehrere parasitäre Effekte auftreten können, die sich beispielsweise aus einer Impedanz des Kabelbaums ergeben oder auch aus Ablagerungen auf der Elektrode, mit unbekannten elektrischen Eigenschaften. Hierdurch können die gewünschten Messeffekte überlagert werden, was eine Eigendiagnose erschwert. Weiterhin wird in US 2012/0119759 A1 ein Partikelsensor mit mehreren Elektrodensystemen beschrieben, der einen Vorspannungs-Widerstand zwischen Detektorelektroden aufweist. Dieser ermöglicht eine Diagnose von auftretenden Fehlern in dem Detektorsystem. Nachteilig an dieser Anordnung ist jedoch, dass im Fehlerfall stets ein Totalausfall detektiert wird, selbst wenn die Elektrodenstruktur bei einem kleinen Teildefekt beispielsweise noch zu einem großen Teil funktionsfähig ist. Ein weiteres Sensorelement zur Bestimmung von Partikeln in einem fluiden Medium ist in DE102006042361 beschrieben.

Wünschenswert wäre dementsprechend ein Sensorelement zur Bestimmung von Partikeln in einem fluiden Medium, welches die oben genannten Herausforderungen adressiert und die Nachteile bekannter Sensorelemente und Sensorvorrichtungen zumindest weitgehend vermeidet. Insbesondere wäre ein Sensorelement wünschenswert, dessen Eigendiagnosefähigkeit gegenüber dem Stand der Technik deutlich verbessert ist.

### Offenbarung der Erfindung

In einem ersten Aspekt der vorliegenden Erfindung wird dementsprechend ein Sensorelement zur Bestimmung von Partikeln in einem fluiden Medium vorgeschlagen. Unter einem Sensorelement ist dabei allgemein eine Vorrichtung zu verstehen, welche eingerichtet ist, mindestens eine Messgröße zu erfassen und diese in mindestens ein Messsignal umzuwandeln, beispielsweise ein elektrisches Messsignal, beispielsweise ein analoges oder digitales Messsignal. Unter einem fluiden Medium kann allgemein eine Flüssigkeit oder ein Gas verstanden werden. Insbesondere kann das Sensorelement zur Bestimmung eines Partikelanteils, einer Partikelmasse oder einer Partikelkonzentration in Gasen einsetzbar sein. Insbesondere kann das Sensorelement zum Einsatz in einem Abgasstrang eines Kraftfahrzeugs eingerichtet sein, so dass es sich bei dem fluiden Medium beispielsweise um ein Abgas handeln kann, beispielsweise ein Abgas in einem Abgasstrang eines Kraftfahrzeugs. Das Sensorelement kann beispielsweise, wie oben ausgeführt, mittels eines Schutzrohrs in den Abgasstrang eingebracht werden. Diesbezüglich kann beispielsweise auf den Stand der Technik verwiesen werden.

Das Sensorelement umfasst mindestens ein Elektrodensystem mit mindestens einer ersten Elektrode und mindestens einer zweiten Elektrode, wobei die erste und die zweite Elektrode derart angeordnet sind, dass eine Ablagerung von Partikeln auf dem Sensorelement durch eine Änderung eines Widerstands, gemessen mit Gleichstrom oder auch mit Wechselstrom, zwischen der ersten Elektrode und der zweiten Elektrode, erfassbar ist. Wie aus dem Stand der Technik bekannt, kann dies beispielsweise durch eine Korrelation zwischen einer Widerstandsgröße und einer Ablagerung der Partikel, bei welchen es sich insbesondere um Rußpartikel handeln kann, erfolgen. Ein derartiger Zusammenhang kann beispielsweise in einem Steuergerät hinterlegt sein.

Das Elektrodensystem umfasst weiterhin mindestens eine Flächenelektrode. Die Flächenelektrode ist von dem fluiden Medium getrennt angeordnet, insbesondere räumlich getrennt, beispielsweise in einer anderen Schichtebene, wie unten noch näher erläutert wird.

Unter einer Elektrode ist dabei im Rahmen der vorliegenden Erfindung allgemein eine leitfähige Struktur zu verstehen, welche elektrisch kontaktierbar ist, so dass beispielsweise die Elektrode von außen, also von außerhalb des Sensorelements, mit einem Strom und/oder einer Spannung beaufschlagbar ist und/oder dass beispielsweise ein Strom und/oder eine Spannung an der mindestens einen Elektrode erfassbar ist. Die Elektrode kann insbesondere mindestens eine Grenzfläche oder Elektrodenfläche zu mindestens einem Medium aufweisen, beispielsweise zu einem Festkörper und/oder einem Gas, über welche mindestens eine elektrische Messgröße erfassbar ist. Unter einer Flächenelektrode ist dabei allgemein eine Elektrode zu verstehen, welche flächig ausgebildet ist, im Gegensatz zu einer langgestreckten, fingerförmigen Elektrode. So kann beispielsweise ein Äquivalentdurchmesser der Flächenelektrode in einer ersten Dimension einem Äquivalentdurchmesser in einer zweiten Dimension entsprechen, beispielsweise mit einer Abweichung von nicht mehr als einem Faktor 10, vorzugsweise mit einer Abweichung von nicht mehr als einem Faktor 5 oder mit einer Abweichung von nicht mehr als einem Faktor 2. Beispielsweise kann die Flächenelektrode rechteckig ausgestaltet sein, mit einem Längen-zu-Breiten-Verhältnis von nicht mehr als 10, vorzugsweise von nicht mehr als 5. Auf diese Weise lassen sich Flächenelektroden beispielsweise von linienförmigen Zuleitungen unterscheiden, welche langgestreckt ausgebildet sind und deren Länge in der Regel ihre Breite um mehr als einen Faktor 10, beispielsweise um mehr als einen Faktor 20, überschreitet.

Wie oben ausgeführt, ist die Flächenelektrode von dem fluiden Medium getrennt angeordnet. Dies bedeutet insbesondere, dass die Flächenelektrode nicht mit dem fluiden Medium beaufschlagt wird, so dass beispielsweise keine Rußpartikel zu der Flächenelektrode vordringen können.

Das Sensorelement kann insbesondere als keramisches Sensorelement ausgestaltet sein, beispielsweise als keramisches Schicht-Sensorelement. Dementsprechend kann das Sensorelement beispielsweise mindestens eine keramische Schicht umfassen, beispielsweise Aluminiumoxid. Das Sensorelement kann beispielsweise mittels eines Folien- und/oder Dickschichtverfahrens hergestellt werden.

Die erste Elektrode und die zweite Elektrode können insbesondere kammförmig ausgestaltet sein und jeweils eine Mehrzahl von Elektrodenfingern aufweisen. Unter einer kammförmigen Ausgestaltung ist dabei eine Anordnung zu verstehen, bei welcher sich eine Mehrzahl von Elektrodenfingern von einem Rückgrat der Elektrode aus erstrecken, beispielsweise in einem Winkel von 90°. Die Elektrodenfinger können beispielsweise parallel zueinander ausgerichtet sein, beispielsweise eine identische Länge aufweisen. Die Elektrodenfinger der ersten Elektrode und die Elektrodenfinger der zweiten Elektrode können beispielsweise ineinander eingreifen. Auf diese Weise kann beispielsweise eine Interdigital-Elektrodenstruktur entstehen. Beispielsweise können das Rückgrat der ersten Elektrode und das Rückgrat der zweiten Elektrode parallel zueinander ausgerichtet sein, und die Elektrodenfinger können sich jeweils hin zu der anderen Elektrode erstrecken, jedoch nicht bis hin zum jeweils anderen Rückgrat der jeweils anderen Elektrode. Zwischen den Rückgraten der Elektroden können dann abwechselnd die Elektrodenfinger angeordnet sein, welche abwechselnd mit dem ersten Rückgrat oder dem zweiten Rückgrat verbunden sind.

Die Elektrodenfinger können insbesondere mit einer Messoberfläche des Sensorelements in Verbindung stehen, wobei die Messoberfläche mit dem fluiden Medium beaufschlagbar ist. Dies kann insbesondere bedeuten, dass die Elektrodenfinger der ersten Elektrode und/oder die Elektrodenfinger der zweiten Elektrode in einer obersten Schichtebene des Sensorelements angeordnet sind. Auch eine andere Beaufschlagung der Elektrodenfinger ist jedoch grundsätzlich möglich.

Das Sensorelement kann insbesondere einen Schichtaufbau aufweisen. Die Flächenelektrode kann insbesondere in einer tiefer in dem Sensorelement angeordneten Schichtebene angeordnet sein als die erste Elektrode und die zweite Elektrode. So kann beispielsweise das Sensorelement, wie oben ausgeführt, eine Messoberfläche aufweisen. Ausgehend von dieser Messoberfläche können dann innerhalb des Schichtaufbaus, beispielsweise parallel zur Messoberfläche, mehrere Schichten angeordnet sein, wobei die Flächenelektrode tiefer in dem Sensorelement angeordnet ist als die erste Elektrode und die zweite Elektrode.

Die Elektrodenfinger der ersten Elektrode und die Elektrodenfinger der zweiten Elektrode können beispielsweise gemeinsam einen Messbereich aufspannen. Unter einem Messbereich und der Aufspannung eines Messbereichs kann beispielsweise eine Minimalfläche verstanden werden, welche sämtliche Elektrodenfinger der ersten Elektrode und der zweiten Elektrode sowie optional zusätzlich die Rückgrate der ersten Elektrode und der zweiten Elektrode umspannt oder erfasst. Die Flächenelektrode kann beispielsweise eine Gesamtfläche von mindestens der Hälfte der Fläche des Messbereichs aufweisen, vorzugsweise mindestens die Fläche des Messbereichs und besonders bevorzugt mehr als die Fläche des Messbereichs. Auch andere Ausgestaltungen sind jedoch grundsätzlich möglich. Beispielsweise kann eine Projektion des Messbereichs, vertikal zu dem Messbereich, beispielsweise vertikal zu den Schichtebenen des Sensorelements, in eine Ebene der Flächenelektrode vollständig innerhalb der Flächenelektrode angeordnet sein. In einer Blickrichtung auf den Schichtaufbau des Sensorelements, beispielsweise in einer Blickrichtung senkrecht zu der Messoberfläche, können dann beispielsweise die erste Elektrode und die zweite Elektrode innerhalb der Flächenelektrode angeordnet sein.

Die Flächenelektrode ist von der ersten Elektrode und der zweiten Elektrode durch mindestens eine elektrisch isolierende Schicht getrennt.

Die elektrisch isolierende Schicht ist vorzugsweise vergleichsweise dünn ausgestaltet und weist beispielsweise eine Dicke von weniger als 15 µm auf, vorzugsweise eine Dicke von weniger als 10 µm. Beispielsweise kann diese elektrisch isolierende Schicht eine Dicke von 1 µm bis 30 µm aufweisen.

Die erste Elektrode und die zweite Elektrode können auch in alternativer Ausgestaltung umgesetzt werden, z.B. auch einer Kombination aus mäanderförmigen Bahnen und kammförmigen Strukturen in Form von angehängten Fingern entlang den Mäanderbahnen. Auch andere Ausgestaltungen sind denkbar.

Weiterhin kann eine Kapazität eines Kondensators, welcher aus der Flächenelektrode und einer oder beiden der ersten Elektrode und der zweiten Elektrode gebildet wird, besonders groß ausgestaltet werden. Diese hohe Kapazität kann beispielsweise, wie oben ausgeführt, durch die geringe Dicke der elektrisch isolierenden Schicht hervorgerufen werden. Zusätzlich ist die Dielektrizitätszahl der elektrisch isolierenden Schicht auch besonders hoch ausgestaltet um die Kapazität zu erhöhen. Die elektrisch isolierende Schicht weist Aluminiumoxid, insbesondere Al₂O₃, auf. Die elektrisch isolierende Schicht weist, zusätzlich zu Aluminiumoxid, auch mindestens einen Dotierstoff auf, wobei eine Dielektrizitätszahl der elektrisch isolierenden Schicht größer ist als eine Dielektrizitätszahl einer reinen Aluminiumoxid-Schicht gleicher Schichtdicke, insbesondere als einer Al₂O₃-Schicht gleicher Schichtdicke. Der Dotierstoff kann beispielsweise Y₂O₃ oder ZrO₂. umfassen. Weiterhin kann TiO₂ vorteilhaft eingesetzt werden. Besonders vorteilhaft sind ferro-elektrische Materialien wie z.B. BaTiO₃, die als Mischung mit Al₂O₃ eingebracht werden können, um gezielt eine Anpassung an den Gesamtmaterialverbund vorzunehmen, z.B. hinsichtlich des Sinterverhaltens während der Herstellung.

Die Flächenelektrode kann insbesondere mindestens ein elektrisch leitfähiges Material aufweisen. Dieses mindestens eine Material kann beispielsweise ausgewählt sein aus der Gruppe bestehend aus: Platin, Gold, Rhodium, einer leitfähigen Keramik. Beispielsweise kann es sich hierbei um eine leitfähige Platin-Keramik, eine leitfähige Gold-Keramik, eine leitfähige Rhodium-Keramik oder ein anderes Cermet handeln, wobei die Abkürzung Cermet ein Metall-Keramik-Gemisch beinhaltet.

Die Flächenelektrode kann insbesondere eine durchgehend geschlossene Fläche aufweisen. Alternativ oder zusätzlich kann die Flächenelektrode jedoch auch eine oder mehrere Öffnungen aufweisen. Insbesondere kann es sich hierbei um eine Gitterelektrode handeln. Vorzugsweise übersteigt dabei die Gesamtfläche der Öffnungen jedoch nicht die Gesamtfläche der Flächenelektrode.

In einem weiteren Aspekt der vorliegenden Erfindung wird eine Sensorvorrichtung zur Bestimmung von Partikeln in einem fluiden Medium vorgeschlagen, insbesondere zum Einsatz in einem Abgasstrang eines Kraftfahrzeugs. Auch andere Einsatzgebiete sind jedoch grundsätzlich möglich. Die Sensorvorrichtung umfasst mindestens ein Sensorelement gemäß der vorliegenden Erfindung, beispielsweise gemäß einer oder mehreren der oben beschriebenen Ausgestaltungen und/oder gemäß einer oder mehreren der nachfolgend noch näher beschriebenen Ausführungsformen. Weiterhin umfasst die Sensorvorrichtung mindestens eine Ansteuerung, auch als Steuervorrichtung oder Steuergerät bezeichnet. Die Ansteuerung ist elektrisch mit dem Elektrodensystem verbunden und weist mindestens eine Messvorrichtung auf, welche eingerichtet ist, um einen Widerstand zwischen der ersten Elektrode und der zweiten Elektrode zu messen. Beispielsweise kann es sich dabei um ein Ohmmeter handeln. Die Messvorrichtung kann beispielsweise eine Spannungsquelle und/oder eine Stromquelle aufweisen und eine Strommessvorrichtung bzw. eine Spannungsmessvorrichtung. Die Spannungsquelle bzw. Stromquelle kann eine Gleichspannungsquelle und/oder eine Gleichstromquelle umfassen und/oder kann auch eine Wechselspannungsquelle und/oder eine Wechselstromquelle umfassen. Auf diese Weise kann, wie dem Fachmann bekannt, eine Widerstandsmessung durchgeführt werden, bei Gleichstrom bzw. Gleichspannung oder bei Wechselstrom und/oder Wechselspannung. Auch eine gepulste Messung ist grundsätzlich möglich.

Die Ansteuerung weist weiterhin mindestens eine Diagnosevorrichtung auf. Unter einer Diagnosevorrichtung ist dabei allgemein eine Vorrichtung zu verstehen, welche eingerichtet ist, um eine Eigendiagnose der Sensorvorrichtung, insbesondere des Sensorelements, vorzunehmen und beispielsweise Defekte in dem Sensorelement zu erkennen. Die Diagnosevorrichtung ist eingerichtet, um mindestens eine Diagnosegröße ausgewählt aus der Gruppe bestehend aus einer Kapazität und einer Impedanz bei einer Messung zwischen der Flächenelektrode einerseits und einer Elektrode ausgewählt aus der Gruppe bestehend aus der ersten Elektrode und der zweiten Elektrode andererseits zu messen. In anderen Worten ist die Diagnosevorrichtung eingerichtet, um eine Diagnosegröße zu erfassen. Die Diagnosegröße bezieht sich auf einen Kondensator, welcher gebildet wird, aus der Flächenelektrode einerseits und der ersten Elektrode und/oder der zweiten Elektrode andererseits. Die Diagnosegröße ist entweder die Kapazität oder die Impedanz, also der komplexe Widerstand, dieses Kondensators. Die Diagnosevorrichtung kann beispielsweise eingerichtet sein, um diese Diagnosegröße entweder an eine externe Vorrichtung weiterzugeben, beispielsweise ein Steuergerät und/oder ein Motorsteuergerät, und/oder kann selbst eingerichtet sein, um die Diagnosegröße ganz oder teilweise auszuwerten. Beispielsweise kann die mindestens eine Diagnosegröße bei der Auswertung mit mindestens einer Sollgröße verglichen werden, beispielsweise einer festen Sollgröße und/oder einem Sollbereich. Bei Abweichungen kann beispielsweise auf einen Fehler des Sensorelements geschlossen werden. Dabei können auch abgestufte Fehlerdiagnosen vorgenommen werden, beispielsweise durch einen Vergleich der Diagnosegröße mit mehreren Bereichen, um beispielsweise einen Fehlergrad zu ermitteln.

Die Diagnosevorrichtung kann insbesondere mindestens eine Impedanz-Messvorrichtung aufweisen. Derartige Impedanz-Messvorrichtungen, welche einen komplexen Widerstand erfassen, sind dem Fachmann grundsätzlich bekannt. Die Diagnosevorrichtung kann insbesondere eingerichtet sein, um eine Stimulation, beispielsweise eine Stimulation des oben genannten Kondensators, mit einer Wechselspannung zu erzeugen.

In einem weiteren Aspekt der vorliegenden Erfindung wird ein Verfahren zur Eigendiagnose eines Sensorelements zur Bestimmung von Partikeln in einem fluiden Medium vorgeschlagen. Der Fehler kann dabei digital ausgestaltet sein, beispielsweise indem lediglich erkannt wird, ob ein Fehler vorliegt oder nicht. Alternativ oder zusätzlich kann jedoch auch ein Grad der Fehlerhaftigkeit ermittelt werden. Unter einem Fehler kann beispielsweise eine elektrische Fehlfunktion verstanden werden, die z.B. durch eine Degradation der ersten Elektrode und/oder der zweiten Elektrode bedingt ist und/oder durch einen zu geringen Widerstand zwischen der ersten Elektrode und der zweiten Elektrode.

Bei dem Verfahren wird ein Sensorelement gemäß der vorliegenden Erfindung verwendet. Diesbezüglich kann auf die Beschreibung des Sensorelements verwiesen werden. Weiterhin wird bei dem Verfahren eine Diagnosegröße ausgewählt aus der Gruppe bestehend aus einer Kapazität und einer Impedanz bei einer Messung zwischen der Flächenelektrode einerseits und einer Elektrode ausgewählt aus der Gruppe bestehend aus der ersten Elektrode und der zweiten Elektrode andererseits erfasst. Aus der Diagnosegröße wird auf eine Funktionalität des Sensorelements geschlossen, insbesondere auf eine Fehlerhaftigkeit und/oder einen Grad eines Fehlers des Sensorelements. Die Erfassung der Diagnosegröße und/oder das Schließen auf die Funktionalität des Sensorelements können insbesondere zeitgleich mit oder zeitlich überlappend zu einer Bestimmung der Partikel in dem fluiden Medium erfolgen, also zu einer Partikelmessung. In anderen Worten kann eine Diagnose mittels des vorgeschlagenen Verfahrens parallel zu der eigentlichen Partikelmessung erfolgen.

Das Sensorelement, die Sensorvorrichtung und das Verfahren gemäß der vorliegenden Erfindung weisen gegenüber bekannten Vorrichtungen und Verfahren der genannten Art zahlreiche Vorteile auf. So kann erfindungsgemäß eine verbesserte Elektrodenstruktur bereitgestellt werden, welche im Gegensatz zum Stand der Technik eine zusätzliche, unterhalb der zur Rußmessung dienenden Elektrodenstruktur liegende, vollflächige Gegenelektrode aufweisen kann. Diese kann mittels einer oder mehrerer Isolationsschichten von der zur Rußmessung verwendeten Elektrodenstruktur getrennt sein. Mittels einer Impedanzmessung kann sich beispielsweise nun eine robuste und zuverlässige elektrische Diagnose mit einer Überwachungsfrequenz von beispielsweise 2 Hz oder mehr realisieren lassen. So kann allgemein die Diagnosevorrichtung beispielsweise in diesem Frequenzbereich arbeiten. Die Flächenelektrode kann beispielsweise vollflächig ausgeprägt sein und kann als Gegenelektrode wirken. Wie oben ausgeführt, kann die Flächenelektrode, gemeinsam mit der zur eigentlichen Partikelmessung verwendeten Elektrodenstruktur mit der ersten Elektrode und der zweiten Elektrode einen Kondensator bilden. Die Kapazität dieses Kondensators kann möglichst groß ausgestaltet werden, indem beispielsweise die Isolationsschicht eine möglichst geringe Dicke aufweist. Auf diese Weise lässt sich der Messeffekt, welcher zur Diagnose verwendet wird, erheblich steigern, insbesondere im Falle einer kapazitiven Messung. Die Messkapazität dieser Anordnung ist vorzugsweise um mindestens einen Faktor größer als diejenige des Kabelbaums, über welchen das Sensorelement angebunden ist, um den Einfluss des Kabelbaums zu minimieren oder sogar weitgehend zu eliminieren.

Vorteilhafterweise ist die mindestens eine elektrisch isolierende Schicht des oben genannten Kondensators nicht dem fluiden Medium, beispielsweise dem Abgas ausgesetzt. Auf diese Weise kann die Messung in vertikaler Richtung, senkrecht zu dem Schichtaufbau, zu Diagnosezwecken nahezu ausschließlich über einen geschützten Bulk-Bereich des Sensorelements erfolgen und kann somit eine wesentlich erhöhte Alterungsbeständigkeit im Vergleich zu herkömmlichen Sensorelementen aufweisen. Weiterhin ist vorteilhaft zu vermerken, dass die Elektrodenstrukturen, einschließlich Gegenelektrode, auf Basis aktueller Dickschicht-Technologien umgesetzt und hergestellt werden können.

### Kurze Beschreibung der Figuren

Weitere Einzelheiten und Merkmale ergeben sich aus der nachfolgenden Beschreibung von Ausführungsbeispielen. Die Erfindung ist nicht auf die Ausführungsbeispiele beschränkt.

Es zeigen:

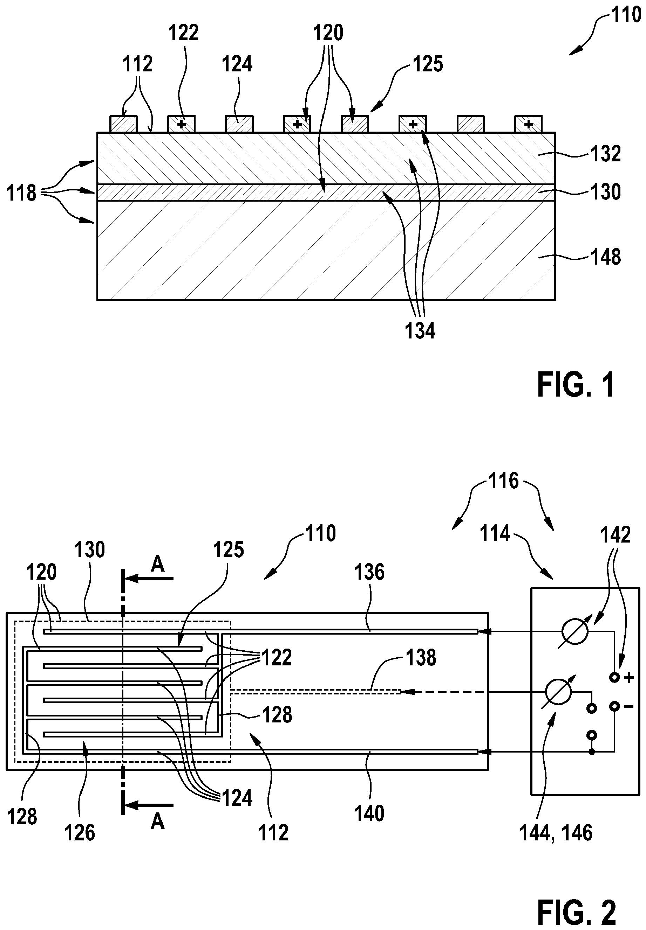

- Figuren 1 und 2:: eine Draufsicht (Figur 2) und eine Schnittdarstellung entlang einer Schnittlinie A-A in Figur 2 (Figur 1) eines Ausführungsbeispiels eines erfindungsgemäßen Sensorelements und (nur Figur 2) einer Sensorvorrichtung.

### Beschreibung der Ausführungsbeispiele

In den Figuren 1 und 2 ist ein Ausführungsbeispiel eines erfindungsgemäßen Sensorelements 110 zur Bestimmung von Partikeln, beispielsweise Rußpartikeln, in einem fluiden Medium, beispielsweise einem Abgas eines Kraftfahrzeugs, gezeigt. Dabei zeigt Figur 2 eine Draufsicht auf das Sensorelement 110, mit Blickrichtung auf eine Messoberfläche 112, und Figur 1 zeigt einen Ausschnitt einer Schnittdarstellung entlang einer Schnittlinie A-A in Figur 1. Figur 2 zeigt weiterhin eine Ansteuerung 114, welche mit dem Sensorelement 110 elektrisch verbunden ist. Die Ansteuerung 114 und das Sensorelement 110 bilden gemeinsam Bestandteile einer Sensorvorrichtung 116. Die Figuren 1 und 2 werden im Folgenden gemeinsam erläutert.

Das Sensorelement 110 weist, wie insbesondere in Figur 1 erkennbar, einen Schichtaufbau 118 auf. Schichten des Schichtaufbaus 118 erstrecken sich dabei parallel zu der Messoberfläche 112. Der Schichtaufbau umfasst unter anderem ein Elektrodensystem 120. Dieses Elektrodensystem 120 umfasst eine erste Elektrode 122 und eine zweite Elektrode 124, welche beide auf der Messoberfläche 112 angeordnet sind. Die erste Elektrode 122 und die zweite Elektrode 124 bilden gemeinsam ein Elektrodensystem zur Rußpartikelmessung. Es handelt sich bei der ersten Elektrode 122 und bei der zweiten Elektrode 124 in diesem Ausführungsbeispiel vorzugsweise um jeweils kammförmige Elektroden, deren Elektrodenfinger 126, die sich jeweils von einem Elektrodenrückgrat 128 aus erstrecken, ineinander eingreifen. Auf diese Weise bilden sich beispielsweise äquidistante Interdigitalelektroden. Die erste Elektrode 122 und die zweite Elektrode 124, insbesondere Kammstrukturen der ersten Elektrode 122 und der zweiten Elektrode 124, bilden gemeinsam einen Messbereich 125.

In einer tieferliegenden Schichtebene des Schichtaufbaus 118 befindet sich weiterhin eine dem Elektrodensystem 120 zugeordnete Flächenelektrode 130. Diese Flächenelektrode 130 ist von der ersten Elektrode 122 und der zweiten Elektrode 124 durch eine elektrisch isolierende Schicht 132 getrennt. Auf diese Weise bildet sich, aus der Flächenelektrode 130, der elektrisch isolierenden Schicht 132 und der ersten Elektrode 122 und/oder der zweiten Elektrode 124 ein Kondensator 134.

Die Elektroden 122, 124 und 130 werden jeweils über Elektrodenzuleitungen 136, 138 und 140 kontaktiert. Die Elektrodenzuleitungen 136, 138 können beispielsweise auf der Messoberfläche 112 angeordnet sein und können beispielsweise von einer elektrisch isolierenden Schicht überzogen sein bzw. von einem Messgasraum, in welchem sich das fluide Medium befindet, getrennt sein. Die Elektrodenzuleitung 140, welche die Flächenelektrode 130 kontaktiert, kann beispielsweise in einer tiefergelegenen Schichtebene angeordnet sein und kann beispielsweise durch eine Durchkontaktierung von der Oberseite oder von der Unterseite her elektrisch kontaktiert werden.

Die Ansteuerung 114 kann beispielsweise, wie in Figur 2 erkennbar, eine Messvorrichtung 142 aufweisen, welche die Elektrodenzuleitungen 136, 140 kontaktiert und somit mit der ersten Elektrode 122 und der zweiten Elektrode 124 verbunden ist. Mittels dieser Messvorrichtung 142 ist es beispielsweise möglich, einen Widerstand zwischen der ersten Elektrode 122 und der zweiten Elektrode 124 zu messen, welcher abhängig ist von einer Rußanlagerung an der Messoberfläche 112. Weiterhin umfasst die Ansteuerung 114 eine Diagnosevorrichtung 144, welche einerseits mit der Flächenelektrode 130 über die Elektrodenzuleitung 138 und andererseits mit einer oder beiden der ersten Elektrode 122 oder zweiten Elektrode 124 verbunden ist. Auf diese Weise lässt sich, wie beispielsweise nachfolgend noch näher beschrieben wird, zu Diagnosezwecken insbesondere eine Impedanzmessung des Kondensators 134 vornehmen. Dementsprechend kann die Diagnosevorrichtung 144 insbesondere mindestens eine Impedanz-Messvorrichtung 146 umfassen.

Wie in Figur 2 erkennbar, in einer Draufsicht auf den Schichtaufbau 118, liegen die erste Elektrode 122 und die zweite Elektrode 124 vorzugsweise innerhalb der Flächenelektrode 130, in einer Projektion, in welcher die erste Elektrode 122 und die zweite Elektrode 124 in eine Ebene der Flächenelektrode 130 projiziert werden.

Der Schichtaufbau 118 kann weiterhin mindestens einen Träger 148 umfassen. Dieser Träger kann beispielsweise wiederum ein keramischer Träger sein. Weiterhin kann der Schichtaufbau 118 zusätzliche Elemente umfassen, welche in Figur 1 nicht dargestellt sind, beispielsweise mindestens ein Heizelement. Dieses Heizelement kann beispielsweise zwischen den Träger 148 und einen weiteren Träger eingebettet sein und kann beispielsweise eingerichtet sein, um das Elektrodensystem 120 zu beheizen.

Das Elektrodendesign kann beispielsweise, wie oben ausgeführt, aus zwei ineinander liegenden Kammstrukturen als Messelektroden (erste Elektrode 122 und zweite Elektrode 124) bestehen. Die Flächenelektrode 130 kann beispielsweise als vergrabene, vollflächig ausgeprägte Gegenelektrode ausgebildet sein und kann beispielsweise in Dickschichttechnologie hergestellt sein. Die elektrisch isolierende Schicht 132, welche die Messelektroden (erste Elektrode 122 und zweite Elektrode 124) von der Flächenelektrode 130 in vertikaler Richtung des Schichtaufbaus 118 in Figur 1 trennt, kann vorzugsweise möglichst dünn ausgestaltet sein. Vorzugsweise wird die Schichtdicke der elektrisch isolierenden Schicht 132 möglichst klein gewählt, beispielsweise kleiner als 10 µm, um eine möglichst große Kapazität des Kondensators 134 darstellen zu können. Die Fläche der als Gegenelektrode fungierenden Flächenelektrode 130 kann beispielsweise entweder identisch zur Fläche der Messelektroden sein, wie näherungsweise in Figur 2 erkennbar, oder kann leicht vergrößert sein.

Da durch die als Gegenelektrode fungierende Flächenelektrode 130 nur äußerst kleine Ströme geführt werden, ist diese zur Materialersparnis vorzugsweise sehr dünn ausgeführt, z.B. wenige Mikrometer, z.B. im Bereich von 2µm bis 5µm. Alternativ kann eine Druckpaste verwendet werden, die einen sehr geringen Platin-Anteil enthalten kann oder einen sehr geringen Anteil eines anderen Metalls, so dass die Leitfähigkeit gerade ausreicht, um bei der angestrebten Schichtdicke im gesinterten Zustand eine ausreichende Leitfähigkeit zu erreichen.

Eine alternative Ausführung der Flächenelektrode 130 besteht darin, von einer vollflächigen Ausgestaltung abzuweichen und eine oder mehrere Öffnungen vorzusehen. So kann beispielsweise die Flächenelektrode 130 auch als Gitterelektrode anstatt einer Vollfläche ausgestaltet sein. Dies kann sich insbesondere vorteilhaft hinsichtlich einer Haftung der darauf angeordneten, beispielsweise gedruckten, Schichten des Schichtaufbaus 118 erweisen und kann einen Bedarf an Edelmetallen verringern, beispielsweise an Platin. Die Gesamtfläche aller Öffnungen in dieser Fläche kann dabei beispielsweise nur so groß sein, dass sich die messbare Kapazität für die Eigendiagnose nur geringfügig verringert. Es kann möglich sein, durch die Ausgestaltung der Flächenelektrode 130 als Gitterelektrode, die thermomechanische Stabilität des Schichtaufbaus 118, insbesondere des Schichtverbunds, zu verbessern, ohne dabei nennenswert an Kapazität zu verlieren.

Weiterhin besteht allgemein, insbesondere hinsichtlich der Flächenelektrode 130, jedoch auch hinsichtlich der ersten und zweiten Elektrode 122, 124, die Möglichkeit, anstelle von Platin ein anderes elektrisch leitfähiges Metall zu verwenden. Beispielsweise können Gold, Rhodium oder Legierungen davon oder eine entsprechend dotierte Keramik eingesetzt werden.

Weiterhin ist die messbare Kapazität des Kondensators 134 erhöht, indem die Dielektrizitätszahl der elektrisch isolierenden Schicht 132 erhöht wird. Als Material für die elektrisch isolierende Schicht 132 wird Aluminiumoxid, insbesondere Al₂O₃, verwendet. Mittels einer geeigneten Dotierung ist die Dielektrizitätszahl der elektrisch isolierenden Schicht 132 jedoch über die Dielektrizitätszahl des Al₂O₃ erhöht. Der Dotierstoff kann beispielsweise Y₂O₃, ZrO₂, TiO₂ sowie BaTiO₃ und andere ferro-elektrische Materialien umfassen sowie beliebige Mischungen dieser Materialien. Insbesondere kann es besonders vorteilhaft sein, ferro-elektrische Materialien wie z.B. BaTiO₃ als Mischung mit Al₂O₃ einzubringen, um gezielt eine Anpassung an den Gesamtmaterialverbund vorzunehmen, z.B. hinsichtlich dem Sinterverhalten während der Herstellung.

Hinsichtlich der Ausgestaltung und der Anzahl der Elektrodenfinger 126 der ersten und zweiten Elektroden 122, 124 sind zahlreiche alternative Konfigurationen, alternativ zu den dargestellten Kammelektroden mit äquidistanten Fingerabständen, möglich. Diese sollen jedoch hier nicht weiter ausgeführt werden. So können beispielsweise nicht-äquidistante Fingerabstände eingesetzt werden oder auch andere Geometrien als die dargestellten Kammstrukturen. Die Strukturierung der Messelektroden kann beispielsweise mittels Siebdruck erfolgen oder auch durch Abtrag einer Vollfläche, beispielsweise mittels eines geeigneten Lasers.

Die elektrische Überwachung der Messelektroden (erste Elektrode 122, zweite Elektrode 124) kann insbesondere während einer aktiven Messphase erfolgen, während derer auch die Partikel erfasst werden. So kann insbesondere das erfindungsgemäße Verfahren derart durchgeführt werden, dass eine Diagnose gleichzeitig oder zumindest zeitlich überlappend mit einer eigentlichen Partikelmessung erfolgt. Hierbei kann beispielsweise eine Wechselspannung (AC), die z.B. harmonisch oder rechteckförmig ausgestaltet sein kann, mittels der Diagnosevorrichtung 144 an den Kondensator 134, also beispielsweise zwischen die Flächenelektrode 130 und eine oder beide der ersten und zweiten Elektrode 122, 124, angelegt werden. Eine Stimulation kann dabei über die als Gegenelektrode fungierende Flächenelektrode 130 erfolgen. Dabei kann die Impedanz und/oder die Kapazität bei einer geeigneten Frequenz erfasst werden, beispielsweise in einem Bereich von einigen Hz oder im kHz-Bereich, oder bei mehreren Frequenzen gleichzeitig. Eine Auswertung kann nach den bekannten Verfahren der Impedanzspektroskopie erfolgen. Zu diesem Zweck kann in der Diagnosevorrichtung 144 eine entsprechende Ansteuer- und Auswerteeinheit integriert sein.

In einer weiteren Ausführung kann diese Wechselspannung einer an der Flächenelektrode 130 anliegenden Gleichspannung überlagert sein, die beispielsweise zur Rußanlagerung und -messung verwendet werden kann. Eine Stimulation kann hier an einer der beiden Elektroden erfolgen. Vorzugsweise ist die Wechselspannung dabei signifikant kleiner als die Gleichspannung, um die Rußmessung möglichst wenig zu beeinflussen. Allgemein können somit die zur Diagnose mittels der Diagnosevorrichtung 144 verwendeten Spannungen kleiner sein, beispielsweise um mindestens einen Faktor 2, als die zur Partikelmessung verwendeten Spannungen. Weiterhin können die Signalform und das Tastverhältnis der Wechselspannung so gewählt werden, dass eine Beeinflussung der Rußmessung möglichst gering ausfällt.

## Patentansprüche

1. Sensorelement (110) zur Bestimmung von Partikeln in einem fluiden Medium, insbesondere zum Einsatz in einem Abgasstrang eines Kraftfahrzeugs, umfassend ein Elektrodensystem (120) mit mindestens einer ersten Elektrode (122) und mindestens einer zweiten Elektrode (124), wobei die erste Elektrode (122) und die zweite Elektrode (124) derart angeordnet sind, dass eine Ablagerung von Partikeln durch eine Messung einer Änderung eines Widerstands zwischen der ersten Elektrode (122) und der zweiten Elektrode (124) erfassbar ist, wobei das Elektrodensystem (120) weiterhin mindestens eine Flächenelektrode (130) aufweist, wobei die Flächenelektrode (130) von dem fluiden Medium getrennt angeordnet ist, wobei wobei die Flächenelektrode (130) von der ersten Elektrode (122) und der zweiten Elektrode (124) durch mindestens eine elektrisch isolierende Schicht (132) getrennt ist, wobei die elektrisch isolierende Schicht Aluminiumoxid aufweist, **dadurch gekennzeichnet, dass** die elektrisch isolierende Schicht (132) weiterhin mindestens einen Dotierstoff aufweist, wobei eine Dielektrizitätszahl der elektrisch isolierenden Schicht (132) größer ist als eine Dielektrizitätszahl einer reinen Aluminiumoxid-Schicht gleicher Schichtdicke.

2. Sensorelement (110) nach dem vorhergehenden Anspruch, wobei die erste Elektrode (122) und die zweite Elektrode (124) kammförmig ausgestaltet sind und jeweils eine Mehrzahl von Elektrodenfingern (126) aufweisen, wobei die Elektrodenfinger (126) der ersten Elektrode (122) und die Elektrodenfinger (126) der zweiten Elektrode (124) ineinander eingreifen.

3. Sensorelement (110) nach einem der vorhergehenden Ansprüche, wobei das Sensorelement (110) einen Schichtaufbau (118) aufweist, wobei die Flächenelektrode (130) in einer tiefer in dem Sensorelement (110) angeordneten Schichtebene angeordnet ist als die erste Elektrode (122) und die zweite Elektrode (124).

4. Sensorelement (110) nach einem der vorhergehenden Ansprüche, wobei die Elektrodenfinger (126) der ersten Elektrode (122) und die Elektrodenfinger (126) der zweiten Elektrode (124) gemeinsam einen Messbereich (125) aufspannen, wobei die Flächenelektrode (130) eine Fläche von mindestens der Hälfte der Fläche des Messbereichs (125) aufweist.

5. Sensorelement (110) nach dem vorhergehenden Anspruch, wobei eine Projektion des Messbereichs (125), vertikal zu dem Messbereich (125), in eine Ebene der Flächenelektrode (130) vollständig innerhalb der Flächenelektrode (130) angeordnet ist.

6. Sensorelement (110) nach dem vorhergehenden Anspruch, wobei die elektrische isolierende Schicht (132) eine Dicke von weniger als 15 Mikrometern aufweist.

7. Sensorvorrichtung (116) zur Bestimmung von Partikeln in einem fluiden Medium, insbesondere zum Einsatz in einem Abgasstrang eines Kraftfahrzeugs, umfassend mindestens ein Sensorelement (110) nach einem der vorhergehenden Ansprüche, weiterhin umfassend mindestens eine Ansteuerung (114), wobei die Ansteuerung (114) elektrisch mit dem Elektrodensystem (120) verbunden ist und mindestens eine Messvorrichtung (142) aufweist, die eingerichtet ist, um einen Widerstand zwischen der ersten Elektrode (122) und der zweiten Elektrode (124) zu messen, wobei die Ansteuerung (114) weiterhin mindestens eine Diagnosevorrichtung (144) aufweist, wobei die Diagnosevorrichtung (144) eingerichtet ist, um mindestens eine Diagnosegröße ausgewählt aus der Gruppe bestehend aus einer Kapazität und einer Impedanz bei einer Messung zwischen der Flächenelektrode (130) einerseits und einer Elektrode ausgewählt aus der Gruppe bestehend aus der ersten Elektrode (122) und der zweiten Elektrode (124) andererseits zu messen.

8. Verfahren zur Eigendiagnose eines Sensorelements (110) zur Bestimmung von Partikeln in einem fluiden Medium, wobei ein Sensorelement (110) nach einem der vorhergehenden, ein Sensorelement (110) betreffenden Ansprüche verwendet wird, wobei eine Diagnosegröße ausgewählt aus der Gruppe bestehend aus einer Kapazität und einer Impedanz bei einer Messung zwischen der Flächenelektrode (130) einerseits und einer Elektrode ausgewählt aus der Gruppe bestehend aus der ersten Elektrode (122) und der zweiten Elektrode (124) andererseits erfasst wird und aus der Diagnosegröße auf eine Funktionalität des Sensorelements (110) geschlossen wird.

## Claims

1. Sensor element (110) for determining particles in a fluid medium, in particular for use in an exhaust gas system of a motor vehicle, comprising an electrode system (120) having at least one first electrode (122) and at least one second electrode (124), wherein the first electrode (122) and the second electrode (124) are arranged in such a way that deposition of particles is detectable by means of a measurement of a change in a resistance between the first electrode (122) and the second electrode (124), wherein the electrode system (120) furthermore has at least one planar electrode (130), wherein the planar electrode (130) is arranged in a manner separated from the fluid medium, wherein the planar electrode (130) is separated from the first electrode (122) and the second electrode (124) by at least one electrically insulating layer (132), wherein the electrically insulating layer comprises aluminium oxide, **characterized in that** the electrically insulating layer (132) furthermore comprises at least one dopant, wherein a relative permittivity of the electrically insulating layer (132) is greater than a relative permittivity of a pure aluminium oxide layer having an identical layer thickness.

2. Sensor element (110) according to the preceding claim, wherein the first electrode (122) and the second electrode (124) are configured in a combshaped fashion and each have a plurality of electrode fingers (126), wherein the electrode fingers (126) of the first electrode (122) and the electrode fingers (126) of the second electrode (124) intermesh.

3. Sensor element (110) according to either of the preceding claims, wherein the sensor element (110) has a layer construction (118), wherein the planar electrode (130) is arranged in a layer plane arranged deeper in the sensor element (110) than the first electrode (122) and the second electrode (124) .

4. Sensor element (110) according to any of the preceding claims, wherein the electrode fingers (126) of the first electrode (122) and the electrode fingers (126) of the second electrode (124) jointly span a measurement region (125), wherein the planar electrode (130) has a surface area of at least half of the surface area of the measurement region (125).

5. Sensor element (110) according to the preceding claim, wherein a projection of the measurement region (125), vertically with respect to the measurement region (125), into a plane of the planar electrode (130) is arranged completely within the planar electrode (130).

6. Sensor element (110) according to the preceding claim, wherein the electrically insulating layer (132) has a thickness of less than 15 micrometres.

7. Sensor device (116) for determining particles in a fluid medium, in particular for use in an exhaust gas system of a motor vehicle, comprising at least one sensor element (110) according to any of the preceding claims, furthermore comprising at least one controller (114), wherein the controller (114) is electrically connected to the electrode system (120) and has at least one measuring device (142) designed to measure a resistance between the first electrode (122) and the second electrode (124), wherein the controller (114) furthermore has at least one diagnosis device (144), wherein the diagnosis device (144) is designed to measure at least one diagnosis variable selected from the group consisting of a capacitance and an impedance during a measurement between firstly the planar electrode (130) and secondly an electrode selected from the group consisting of the first electrode (122) and the second electrode (124).

8. Method for the self-diagnosis of a sensor element (110) for determining particles in a fluid medium, wherein a sensor element (110) according to any of the preceding claims relating to a sensor element (110) is used, wherein a diagnosis variable selected from the group consisting of a capacitance and an impedance is detected during a measurement between firstly the planar electrode (130) and secondly an electrode selected from the group consisting of the first electrode (122) and the second electrode (124) and a functionality of the sensor element (110) is deduced from the diagnosis variable.

## Revendications

1. Élément capteur (110) destiné à la détermination de particules dans un milieu fluide, notamment à une utilisation dans une voie de gaz d'échappement d'un véhicule automobile, ledit élément capteur comprenant un système d'électrodes (120) pourvu d'au moins une première électrode (122) et d'au moins une deuxième électrode (124), la première électrode (122) et la deuxième électrode (124) étant disposées de manière à ce qu'un dépôt de particules puisse être détecté par une mesure d'une variation de résistance entre la première électrode (122) et la deuxième électrode (124), le système d'électrodes (120) comprenant en outre au moins une électrode de surface (130), l'électrode de surface (130) étant disposée séparément du milieu fluide, l'électrode de surface (130) étant séparée de la première électrode (122) et de la deuxième électrode (124) par au moins une couche électriquement isolante (132), la couche électriquement isolante comportant de l'oxyde d'aluminium, **caractérisé en ce que** la couche électriquement isolante (132) comporte en outre au moins un dopant, une constante diélectrique de la couche électriquement isolante (132) étant supérieure à une constante diélectrique d'une couche d'oxyde d'aluminium pur de même épaisseur de couche.

2. Élément capteur (110) selon la revendication précédente, la première électrode (122) et la deuxième électrode (124) étant conçues en forme de peigne et comportant chacune une pluralité de doigts d'électrode (126), les doigts d'électrode (126) de la première électrode (122) et les doigts d'électrode (126) de la deuxième électrode (124) s'engageant les uns dans les autres.

3. Élément capteur (110) selon l'une des revendications précédentes, l'élément capteur (110) présentant une structure en couches (118), l'électrode de surface (130) étant disposée dans un plan de couche situé plus profondément dans l'élément capteur (110) que la première électrode (122) et la deuxième électrode (124).

4. Élément capteur (110) selon l'une des revendications précédentes, les doigts d'électrode (126) de la première électrode (122) et les doigts d'électrode (126) de la deuxième électrode (124) couvrant conjointement sur une zone de mesure (125), l'électrode de surface (130) ayant une surface égale à au moins la moitié de la surface de la zone de mesure (125) .

5. Élément capteur (110) selon la revendication précédente, une projection de la zone de mesure (125), verticalement à la zone de mesure (125), dans un plan de l'électrode de surface (130) étant disposée entièrement à l'intérieur de l'électrode de surface (130) .

6. Élément capteur (110) selon la revendication précédente, la couche électriquement isolante (132) ayant une épaisseur inférieure à 15 microns.

7. Dispositif capteur (116) destiné à la détermination de particules dans un milieu fluide, notamment à une utilisation dans une voie de gaz d'échappement d'un véhicule automobile, ledit dispositif capteur comprenant au moins un élément capteur (110) selon l'une des revendications précédentes, comprenant en outre au moins une commande (114), la commande (114) étant reliée électriquement au système d'électrodes (120) et comportant au moins un dispositif de mesure (142) qui est conçu pour mesurer une résistance entre la première électrode (122) et la deuxième électrode (124), la commande (114) comportant en outre au moins un dispositif de diagnostic (144), le dispositif de diagnostic (144) étant conçu pour mesurer au moins une grandeur de diagnostic choisie dans le groupe comprenant une capacité et une impédance lors d'une mesure entre l'électrode de surface (130) d'une part et une électrode choisie dans le groupe comprenant la première électrode (122) et la deuxième électrode (124) d'autre part.

8. Procédé d'autodiagnostic d'un élément capteur (110) destiné à la détermination de particules dans un milieu fluide, un élément capteur (110) étant utilisé conformément à l'une des revendications précédentes concernant un élément capteur (110), une grandeur de diagnostic choisie dans le groupe comprenant une capacité et une impédance étant détectée lors d'une mesure entre l'électrode de surface (130) d'une part et une électrode choisie dans le groupe comprenant la première électrode (122) et la deuxième électrode (124) d'autre part et une fonctionnalité de l'élément capteur (110) étant déduite de la grandeur de diagnostic.
